# EUROPEAN PATENT SPECIFICATION

(11) **EP 2 626 648 B1**
(45) Date of publication and mention of the grant of the patent: **15.01.2020**
(21) Application number: 13154895.0
(22) Date of filing: 12.02.2013
(51) Int. Cl.: F24H 3/04, F24H 3/06, F24H 9/20, F24H 9/00, B60H 1/00, B60H 1/22

(54) **Space heater**
Raumheizgerät
Chaufferette

(30) Priority: 13.02.2012 GB 201202425
(43) Date of publication of application: 14.08.2013
(73) Proprietor: Munster Simms Engineering Limited, Belfast Down BT19 1LT (GB)
(72) Inventor: Smyth, David, Jordanstown, Antrim BT37 0QL (GB); Hirsk, Adam, Banbridge, Down BT32 5PJ (GB)
(74) Representative: FRKelly

(56) References cited:
- EP-A1- 0 246 948
- DE-A1- 19 627 655
- DE-A1- 19 831 472
- FR-A1- 2 629 022
- GB-A- 2 312 039
- JP-A- S59 114 118
- JP-A- 2011 121 430

## Description

### Field of the Invention

The present invention relates to space heaters. The invention relates particularly but not exclusively to space heaters comprising one or more heat exchangers for heating air.

### Background to the Invention

Space heaters are commonly used for heating the interiors of caravans, mobile homes, recreational vehicles and other structures. The heating capability of such heaters can be restricted by factors such as the size of the heater and its tendency to cause overheating. It would be desirable to provide an improved space heater with a relatively high heating capability.

### Summary of the Invention

The invention provides a heater comprising a body having a fluid inlet for receiving fluid to be heated, a fluid outlet for expelling the heated fluid and defining a fluid flow path between said fluid inlet and said fluid outlet, at least one heating device being located in said fluid flow path, wherein said fluid outlet comprises first and second outlet ports, said body including an outlet section located between said at least one heating device and said first and second outlet ports, said outlet section comprising a divider defining a respective outlet channel for directing fluid from said at least one heating device to a respective one of said first or second outlet ports, characterised in that said heater includes a temperature sensor arranged to monitor the temperature in both of said respective outlet channels on either side of the divider, said heater further comprising a control device configured to control the operation of said at least one heating device in response to a temperature signal from said temperature sensor.

Preferably, at least one divider is provided in said end section extending between said at least one heating device and said at least two outlet ports, respective adjacent channels being located on either side of said at least one divider, and wherein said at least one divider is shaped and configured to split, in use, said heated fluid emanating from said at least one heating device such that respective quantities of said fluid flow along respective channels on either side of said at least one divider to a respective one of said at least two outlet ports. Conveniently, the or each divider comprises a plate or plate-like member.

The or each divider may be arranged such that a first end intersects a channel along which said heated fluid passes, in use, downstream of said at least one heating device. In the preferred embodiment, the or each intersection divides the channel into a respective two outlet channels and, in use, divides the fluid flow emanating from the heating device(s). A second end of the or each divider may be located between respective adjacent outlet ports.

According to the invention two outlet ports are provided, and one divider defining two outlet channels. Preferably, the divider substantially bisects said channel along which said heated fluid passes, in use, downstream of said at least one heating device.

Said at least one divider preferably includes at least one aperture for allowing said fluid to pass between adjacent outlet channels. Preferably, said at least one aperture is formed at an end of said divider, for example the end adjacent said at least two outlet ports. The or each aperture may be substantially rectangular in shape. In the preferred embodiment, a single aperture is provided for this purpose, preferably substantially centrally located at an end of said divider.

In preferred embodiments, said at least one divider includes a temperature sensor mounted in an aperture provided in said at least one divider. The arrangement is such that the temperature sensor is capable of measuring the temperature of said fluid on both sides of said at least one divider.

Preferably, said at least one divider is obliquely disposed to an axial direction of said at least one heating device. As such, said at least one divider deflects said fluid emanating from said at least one heating device. This arrangement is typically employed in embodiments where said at least one of said outlet ports has an opening into its respective outlet channel that is substantially parallel with or at least non-perpendicular to said axial direction.

Optionally, a deflector is provided in said end section extending between said at least one heating device and said at least two outlet ports for deflecting said fluid emanating from said at least one heating device towards said at least two outlet ports. The deflector preferably extends from an edge of said channel along which said heated fluid passes, in use, downstream of said at least one heating device, in order not to split the fluid flow. Preferably, said deflector runs substantially parallel with said at least one divider.

Typically, the heater includes a fan, especially a centrifugal fan, arranged to cause fluid to be drawn into said inlet, along said fluid flow path and expelled through said outlet.

In preferred embodiments, two or more heating devices are provided, preferably arranged in series in said fluid flow path. The or each heating device is preferably located in a heating channel having an axial direction along which said fluid flows, in use, through said heating device(s). Said end section is typically located at the end of said heating channel.

In typical embodiments, said at least one heating device comprises an electrical heating device and/or a gas heating device. Each heating device conveniently comprises a heating exchanging device having one or more heating exchanging element locate in said fluid flow path across which said fluid passes in use to be heated.

Preferably, said heater includes a control device, typically comprising suitably configured electrical circuitry and optionally a suitably programmed microprocessor, microcontroller or other programmable processor, configured to control the operation of said at least one heating device. Where there is more than one heating device, it is preferred that at least one and preferably all can be operated individually, and/or that two or more can b operated simultaneously. In preferred embodiments, the control device also controls said fan, preferably such that the fan speed is determined by the number of heating devices in operation. Advantageously the arrangement is such that the fan is operated to increase the rate at which fluid is drawn into the heater in response to an increase in the number of heating devices operating, and preferably vice versa.

According to the invention the control device is configured to control the operation of said at least one heating device in response to a temperature signal from said temperature sensor.

Further advantageous aspects of the invention will become apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:
Figure 1 is a perspective view of a space heater embodying the invention;
Figure 2 is a perspective view of the space heater of Figure 1 with a cover removed to reveal its internal configuration;
Figure 3 is a perspective view of an outlet section of the heater of Figure 1; and
Figure 4 is a plan view of the outlet section of Figure 3.

### Detailed Description of the Drawings

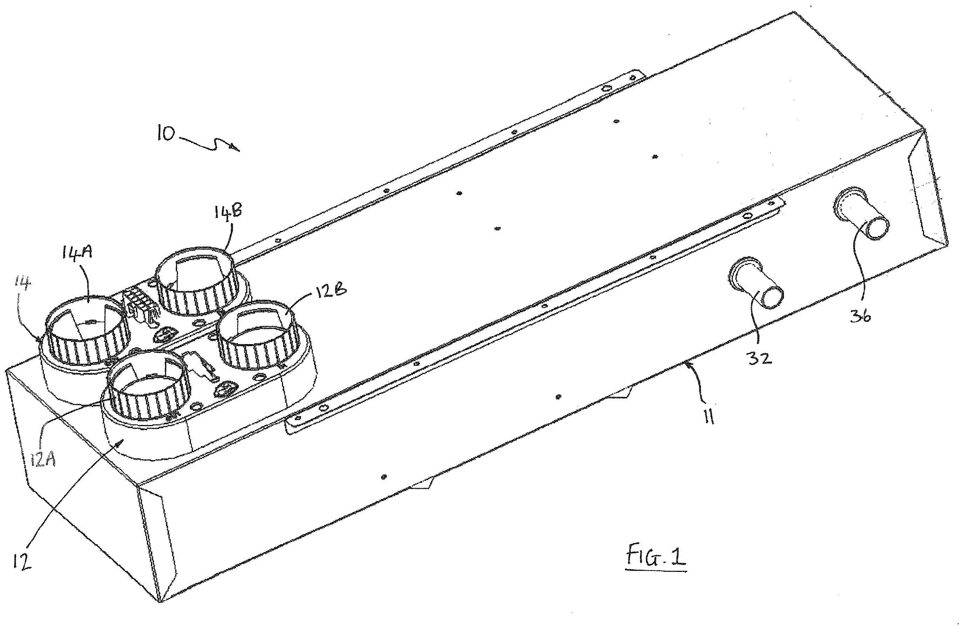

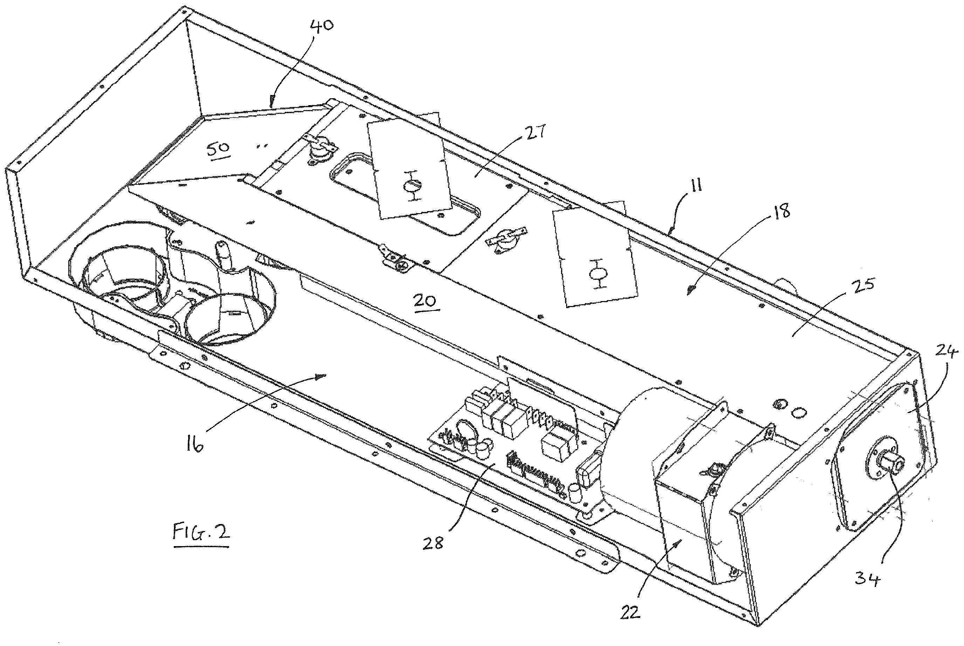

Referring now to Figures 1 and 2 of the drawings there is shown, generally indicated as 10, a heater embodying the invention. The heater 10 comprises a body 11 having an inlet 12 for receiving fluid to be heated and an outlet 14 from which the heated fluid is expelled. In typical applications the fluid comprises air. The air expelled from the outlet 14 is directed to one or more desired destination usually by means of ducting (not shown). The destination is normally a room or compartment, e.g. of a caravan, mobile home or recreational vehicle (RV), the heated air serving to heat the room/compartment. As such, the heater 10 may be referred to as a space heater.

In the illustrated embodiment, inlet 12 has two inlet ports 12A, 12B (although in general one or more inlet ports may be provided) and outlet 14 has two outlet ports 14A, 14B. It is advantageous that outlet 14 has at least two outlet ports as is described in more detail hereinafter.

Internally the body 11 of the heater 10 is configured to define a fluid flow path such that air entering the inlet 12 is directed to the outlet 14 via one or more heating devices. In the illustrated embodiment, the fluid flow path is defined by an induction channel 16 in fluid communication with a heating channel 18. In use air enters the induction channel 16 via the inlet 12, passes along the induction channel and into the heating channel 18, and then exits the heating channel 18 via the outlet 14. Preferably, the channels 16, 18 run substantially parallel with one another and may conveniently be formed by providing a divider wall 20 along the length or width of the heater body 11. It is preferred that the channels 16, 18 run longitudinally of the heater 10 to maximize the available length for the fluid flow path. For the same reason, it is also preferred that the inlet 12 and outlet 14 are located substantially at opposite ends of the fluid flow path. In the illustrated embodiment, the inlet 12 and outlet 14 are located at the same end of the heater 10, the channels 16, 18 defining a U-shaped fluid flow passage between the two. It will be apparent that other configurations are possible.

In typical embodiments, a centrifugal fan 22 is provided for drawing air into to the heater 10 via inlet 12, and blowing it out of the heater 10 via outlet 14. Conveniently, the fan 22 is located in the induction channel 16, preferably at the interface between the induction and heating channels 16, 18, arranged to draw air along the induction channel 16 and pump it into the heating channel 18 upstream of the heating devices.

The heating channel 18 houses two heating devices in this example, namely a gas fuelled heater 24 and an electrical heater 26. The heaters 24, 26 are preferably arranged in series with one another such that air is directed through both on its way to the outlet 14. In the illustrated embodiment, the heaters 24, 26 are located within respective compartments 25, 27 of the heating channel 18. More generally, the heater may comprise one or more heating devices although it is preferred to provide at least two. Where two or more are provided, it is preferred that they are arranged in series.

Electrical circuitry 28 is provided for controlling the operation of the fan 22 and the heaters 24, 26 and conveniently for supplying electrical power as required. The electrical heater 26 may be of the heat exchanging type comprising one or more electrically heated heat exchanging elements 30 across which air is passed to be heated. The gas heater 24 may also be of the heat exchanging type comprising one or more gas heated heat exchanging elements (not visible) across which air to be heated is passed. Gas and air are supplied in use for combustion by the gas heater 24 via respective ports 32, 34, and an exhaust port 36 is provided for exhaust gases.

Electrical circuitry 28 is preferably configured to allow one or both heaters 24, 26 to be operated individually and/or for both heaters to be operated simultaneously. When operated simultaneously, the heaters 24, 26 have a cumulative heating effect on the air. Any suitable user control device (not shown) may be connected (by wired or wireless connection) to the circuitry 28 to allow a user to control operation of the heater 10. Alternatively, or in addition, operation of the heater 10 may be controlled as part of an automated heating system.

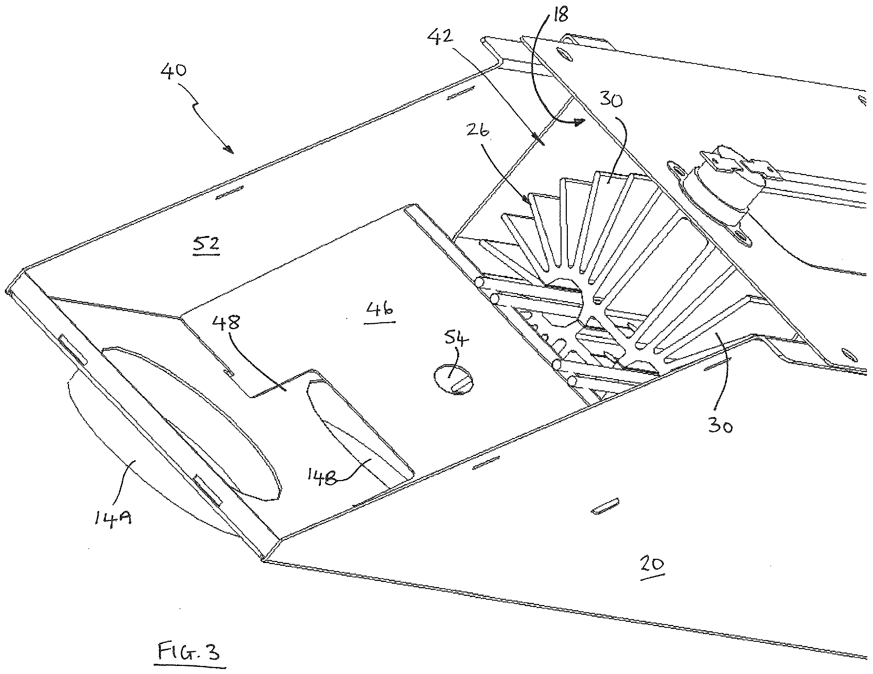

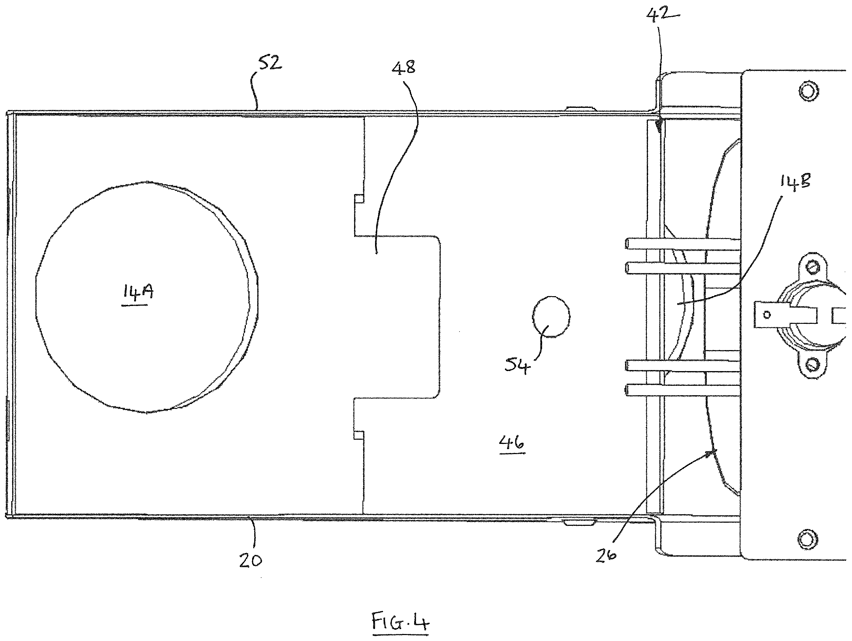

Referring now in particular to Figures 3 and 4, there is described a preferred outlet section 40 of the heater 10. The outlet section 40 is located between the heaters 24, 26 and the outlet 14 and may be said to comprise an end portion of the heating channel 18. More particularly, the last (where there is more than one) of the heaters 26 in the direction of airflow terminates at an end face 42 (which corresponds with a cross section of the channel 18). The outlet ports 14A, 14B are located in a face 44 of the heater body 11, the outlet section 40 being substantially enclosed so that the heated air passes from heater 26 via end face 42 through the section 40 to outlet ports 14A, 14B. A divider 46 is provided in the section 40 for splitting the air emanating from the heater 26 such that a portion of the air is directed to one of the outlet ports 14A and another portion is directed to the other outlet port 14B. The divider 46 divides the outlet section 40 into two channels, each channel being capable of directing air from the end 42 of the heater 26 to a respective outlet port 14A, 14B. Conveniently, the divider 46 comprises a plate, one edge of which may intersect face 42, another edge of which may intersect a wall of the heater body 11 between the outlet ports 14A, 14B. Preferably, the arrangement is such that the face 42 and outlet ports 14A, 14B are located at opposite edges of the plate 46. The divider 46 is preferably arranged to substantially bisect the airflow such that approximately half of the air is directed to a respective one of the outlet ports 14A, 14B. In order to bisect the airflow, the plate 46 may be positioned such that one edge substantially bisects face 42. Another edge of the plate 46 may intersect a wall of the heater body 11 substantially midway between the outlet ports 14A, 14B. In alternative embodiments, a single outlet aperture may be provided, but the divider effectively divides it into two output ports.

The plate 46 is obliquely disposed with respect to the face 42 in order to deflect the air flow in use from its longitudinal path along the channel 18 out of the ports 14A, 14B. In the illustrated embodiment, the outlet ports 14A, 14B are located in a face that is substantially perpendicular to the face 42 and substantially parallel with the direction of air flow along the heating channel 18 (corresponding in this example to an in-use top face of the heater 10) and so the plate 46 is angled to deflect the air flow through substantially 90 degrees.

A boundary of the end section 40 may be defined by a deflector 50, for example comprising a plate, which extends preferably from the edge of face 42 (so as not to split the airflow from the heaters 24, 26) to beyond the outlet ports. The deflector 50 defines the outermost (with respect to the outlet ports) boundary of the outermost channel between the heaters and the outlet ports. In the preferred embodiment, the deflector 50 is spaced apart from and runs substantially parallel with the divider 46. In the illustrated embodiment, the end section 40 is defined by the deflector 50, the dividing wall 20, an oppositely disposed side wall 52 and the face of the heater body 11 in which the outlet ports 14A, 14B are formed.

The divider 46 may be alternatively oriented with respect to the direction of fluid flow along channel 18 depending on, for example, the relative orientation of the plane in which the outlet ports lie. For example, one or both outlet ports may alternatively be located in an end face of the heater body 11 (i.e. facing the face 42) in which case the plate 46 may be substantially parallel with the direction of fluid flow along the channel 18 since deflection is not required. Alternatively still, the outlet ports may be located in respective different faces of the heater body 11. More generally, in preferred embodiments two or more outlet ports are provided in one or more faces of the heater body 11, one or more dividers being arranged to split the outlet section into a respective channel for directing air from the heater(s) to each outlet port, an outer deflector preferably being provided in cases where the or each divider runs obliquely with respect to the direction of air flow along the channel 18. The outlet ports are preferably substantially circular and configured to allow conventional ducting (not shown) to be attached.

Advantageously, the divider 46 includes at least one aperture 48 for allowing a quantity of air to flow between adjacent channels defined by the divider 46. The or each aperture 48 is preferably formed at the edge of the divider 46 that intersects the heater body 11 between the outlet ports 14A, 14B. In the preferred embodiment, a single aperture 48 is provided substantially centrally located along said edge. Preferably, the or each aperture 48 is substantially rectangular in shape. The aperture(s) 48 allow air to pass between adjacent channels in order to alleviate any build up of air pressure in one channel in the event of it being blocked.

In order to facilitate the provision of a temperature feedback control system, according to the invention a temperature sensor is provided for monitoring the temperature of the air in each channel of the end section 40. According to the invention adjacent channels on either side of the divider 46 are monitored by one or more common temperature sensors (not shown). To this end, one or more apertures 54 are formed in the divider 46 with one or more temperature sensors, e.g. thermistor, mounted in the aperture 54 such that it is responsive to the temperature of the air on both sides of the divider 46. The temperature feedback control system may conveniently be implemented by circuitry 28 and may be arranged to turn off, turn down or otherwise regulate one or other or both of the heaters 24, 26 in the event that air temperature above a threshold limit is exceeded in order to prevent overheating.

Preferred heaters 10 embodying the invention are versatile in that they can be operated to use one or other or both of the heaters 24, 26 depending on the user's heating requirements. When both heaters 24, 26 are used simultaneously, the speed of fan 22 may be increased in comparison with single heater use to increase the rate at which air is passed through the heater 10. To accommodate the relatively high rates of air flow and/or the additional heat generated by more than one heater operating, two (or more) outlet ports 14A, 14B are provided. These ports are preferably separate ports each shaped and dimensioned to fit standard ducting. They are preferably separately formed in the body 11 of the heater 10 but could alternatively share a common aperture at the outlet of the end section 40, the common aperture being divided by the divider 46. A further advantage of having more than one outlet port is that the heated air may be directed to more than one location using respective ducting. The preferred arrangement of divider 46 and where necessary deflector 50 causes a substantially equal air flow and air temperature to emerge from each outlet port 14A, 14B. Typical embodiments may for example use 1kW or 2kW heaters.

The invention is not limited to the embodiments described herein which may be modified or varied without departing from the scope of the invention.

## Claims

1. A heater (10) comprising a body (11) having a fluid inlet (12) for receiving fluid to be heated, a fluid outlet (14) for expelling the heated fluid and defining a fluid flow path between said fluid inlet (12) and said fluid outlet (14), at least one heating device (24) being located in said fluid flow path, wherein said fluid outlet (14) comprises first and second outlet ports (14A, 14B), said body (11) including an outlet section (40) located between said at least one heating device (24) and said first and second outlet ports (14A, 14B), said outlet section comprising a divider (46) defining a respective outlet channel for directing fluid from said at least one heating device (24) to a respective one of said first and second outlet ports (14A, 14B), **characterised in that** said heater (10) includes a temperature sensor arranged to monitor the temperature in both of said respective outlet channels on either side of the divider (46), said heater (10) further comprising a control device configured to control the operation of said at least one heating device (24) in response to a temperature signal from said temperature sensor.

2. A heater (10) as claimed in claim 1, wherein said divider (46) extends between said at least one heating device (24) and said first and second outlet ports (14A, 14B), said respective adjacent outlet channels being located on either side of said divider (46), and wherein said divider (46) is shaped and configured to split, in use, said heated fluid emanating from said at least one heating device (24) such that respective quantities of said fluid flow along respective channels on either side of said divider (46) to a respective one of said first and second outlet ports (14A, 14B).

3. A heater (10) as claimed in any preceding claim, wherein said divider (46) includes at least one aperture (48) for allowing said fluid to pass between adjacent outlet channels, said at least one aperture (48) preferably being formed at an end of said divider (46), and preferably being substantially rectangular in shape.

4. A heater (10) as claimed in claim 3, wherein said at least one aperture (48) comprises a single aperture (48), preferably substantially centrally located at an end of said divider (46).

5. A heater (10) as claimed in claim 1 or 2, wherein said temperature sensor is mounted in an aperture (48) provided in said divider (46).

6. A heater (10) as claimed in any preceding claim, wherein said divider (46) is obliquely disposed to an axial direction of said at least one heating device (24).

7. A heater (10) as claimed in any preceding claim, wherein a deflector (50) is provided in said outlet section extending between said at least one heating device (24) and said first and second outlet ports (14A, 14B) for deflecting said fluid emanating from said at least one heating device (24) towards said first and second outlet ports (14A, 14B), the deflector (50) preferably running substantially parallel with said at least one divider (46).

8. A heater (10) as claimed in any preceding claim, including a fan, preferably a centrifugal fan (22), arranged to cause fluid to be drawn into said inlet (12), along said fluid flow path and expelled through said fluid outlet (14).

9. A heater (10) as claimed in any preceding claim, wherein two or more heating devices (24) are provided, preferably arranged in series in said fluid flow path.

10. A heater (10) as claimed in any preceding claim, wherein said at least one heating device (24) comprises an electrical heating device and/or a gas heating device.

11. A heater (10) as claimed in any preceding claim, wherein each heating device (24) comprises a heating exchanging device having one or more heating exchanging elements located in said fluid flow path across which said fluid passes in use to be heated.

12. A heater (10) as claimed in any preceding claim, wherein, said at least one heating device (24) comprises more than one heating device, said controller being configured to control all of said heating devices (24) individually, and/or to control two or more heating devices (24) such that they are operated simultaneously.

13. A heater (10) as claimed in claim 12 when dependent on claim 8, wherein the control device controls, in use, a speed of said fan (22) depending on the number of heating devices (24) in operation to increase the rate at which fluid is drawn into the heater (10) in response to an increase in the number of heating devices (24) operating, and to decrease the rate at which fluid is drawn into the heater in response to decrease in the number of heating devices (24) operating.

## Patentansprüche

1. Heizvorrichtung (10), umfassend einen Körper (11), der einen Fluideinlass (12) zum Aufnehmen von zu erwärmendem Fluid, einen Fluidauslass (14) zum Ausstoßen des erwärmten Fluids aufweist und zwischen dem Fluideinlass (12) und dem Fluidauslass (14) einen Fluidströmungsweg definiert, wobei in dem Fluidströmungsweg mindestens ein Heizgerät (24) angeordnet ist, wobei der Fluidauslass (14) einen ersten und einen zweiten Auslassanschluss (14A, 14B) umfasst, wobei der Körper (11) einen Auslassabschnitt (40) beinhaltet, der zwischen dem mindestens einen Heizgerät (24) und dem ersten und dem zweiten Auslassanschluss (14A, 14B) angeordnet ist, wobei der Auslassabschnitt eine Trennwand (46) umfasst, die einen entsprechenden Auslasskanal zum Lenken des Fluids vom dem mindestens einen Heizgerät (24) zu einem entsprechenden des ersten und des zweiten Auslassanschlusses (14A, 14B) definiert, **dadurch gekennzeichnet, dass** die Heizvorrichtung (10) einen Temperatursensor beinhaltet, der dafür angeordnet ist, die Temperatur in beiden der entsprechenden Auslasskanäle an beiden Seiten der Trennwand (46) zu überwachen, wobei die Heizvorrichtung (10) ferner ein Steuergerät umfasst, das dafür gestaltet ist, den Betrieb des mindestens einen Heizgeräts (24) in Reaktion auf ein Temperatursignal von dem Temperatursensor zu steuern.

2. Heizvorrichtung (10) nach Anspruch 1, wobei sich die Trennwand (46) zwischen dem mindestens einen Heizgerät (24) und dem ersten und dem zweiten Auslassanschluss (14A, 14B) erstreckt, wobei die entsprechenden benachbarten Auslasskanäle an beiden Seiten der Trennwand (46) angeordnet sind und wobei die Trennwand (46) dafür geformt und gestaltet ist, während der Verwendung das erwärmte Fluid, das aus dem mindestens einen Heizgerät (24) ausströmt, derart zu teilen, dass entsprechende Mengen des Fluids in entsprechenden Kanälen auf beiden Seiten der Trennwand (46) zu einem entsprechenden des ersten und des zweiten Auslassanschlusses (14A, 14B) strömen.

3. Heizvorrichtung (10) nach einem vorhergehenden Anspruch, wobei die Trennwand (46) mindestens eine Öffnung (48) beinhaltet, um es dem Fluid zu ermöglichen, zwischen benachbarten Auslasskanälen zu strömen, wobei die mindestens eine Öffnung (48) vorzugsweise an einem Ende der Trennwand (46) gebildet ist und vorzugsweise im Wesentlichen von rechteckiger Form ist.

4. Heizvorrichtung (10) nach Anspruch 3, wobei die mindestens eine Öffnung (48) eine einzelne Öffnung (48) umfasst, die vorzugsweise an einem Ende der Trennwand (46) im Wesentlichen zentral angeordnet ist.

5. Heizvorrichtung (10) nach Anspruch 1 oder 2, wobei der Temperatursensor in eine Öffnung (48) montiert ist, die in der Trennwand (46) bereitgestellt ist.

6. Heizvorrichtung (10) nach einem vorhergehenden Anspruch, wobei die Trennwand (46) schräg zu einer axialen Richtung des mindestens einen Heizgeräts (24) angeordnet ist.

7. Heizvorrichtung (10) nach einem vorhergehenden Anspruch, wobei in dem Auslassabschnitt, der sich zwischen dem mindestens einen Heizgerät (24) und dem ersten und dem zweiten Auslassanschluss (14A, 14B) erstreckt, eine Ablenkplatte (50) bereitgestellt ist, um das Fluid abzulenken, das aus dem mindestens einen Heizgerät (24) hin zum ersten und zum zweiten Auslassanschluss (14A, 14B) strömt, wobei die Ablenkplatte (50) vorzugsweise im Wesentlichen parallel zu der mindestens einen Trennwand (46) liegt.

8. Heizvorrichtung (10) nach einem vorhergehenden Anspruch, beinhaltend ein Gebläse, vorzugsweise ein Zentrifugalgebläse (22), das dafür angeordnet ist zu veranlassen, dass Fluid in den Einlass (12), entlang den Fluidströmungsweg gezogen und durch den Fluidauslass (14) ausgestoßen wird.

9. Heizvorrichtung (10) nach einem vorhergehenden Anspruch, wobei zwei oder mehr Heizgeräte (24) bereitgestellt sind, die vorzugsweise in Reihe in dem Fluidströmungsweg angeordnet sind.

10. Heizvorrichtung (10) nach einem vorhergehenden Anspruch, wobei das mindestens eine Heizgerät (24) ein elektrisches Heizgerät und/oder ein Gasheizgerät umfasst.

11. Heizvorrichtung (10) nach einem vorhergehenden Anspruch, wobei jedes Heizgerät (24) ein Wärmetauschgerät mit einem oder mehreren Wärmetauschelementen umfasst, die in dem Fluidströmungsweg angeordnet sind und über die das Fluid im Gebrauch strömt, um erwärmt zu werden.

12. Heizvorrichtung (10) nach einem vorhergehenden Anspruch, wobei das mindestens eine Heizgerät (24) mehr als ein Heizgerät umfasst, wobei die Steuerung dafür gestaltet ist, alle Heizgeräte (24) individuell zu steuern und/oder zwei oder mehr Heizgeräte (24) derart zu steuern, dass sie simultan betrieben werden.

13. Heizvorrichtung (10) nach Anspruch 12, wenn abhängig von Anspruch 8, wobei das Steuergerät während der Verwendung eine Geschwindigkeit des Gebläses (22) abhängig von der Anzahl an in Betrieb befindlichen Heizgeräten (24) steuert, um in Reaktion auf eine Erhöhung der Anzahl an in Betrieb befindlichen Heizgeräten (24) die Rate zu erhöhen, mit der das Fluid in die Heizvorrichtung (10) gezogen wird, und um in Reaktion auf eine Senkung der Anzahl an in Betrieb befindlichen Heizgeräten (24) die Rate zu senken, mit der das Fluid in die Heizvorrichtung gezogen wird.

## Revendications

1. Appareil de chauffage (10) comportant un corps (11) ayant une entrée de fluide (12) servant à recevoir un fluide destiné à être chauffé, une sortie de fluide (14) servant à expulser le fluide chauffé et définissant un trajet d'écoulement de fluide entre ladite entrée de fluide (12) et ladite sortie de fluide (14), au moins un dispositif de chauffage (24) étant situé dans ledit trajet d'écoulement de fluide, dans lequel ladite sortie de fluide (14) comporte des premier et deuxième orifices de sortie (14A, 14B), ledit corps (11) comprenant une section de sortie (40) située entre ledit au moins un dispositif de chauffage (24) et lesdits premier et deuxième orifices de sortie (14A, 14B), ladite section de sortie comportant un séparateur (46) définissant un canal de sortie respectif servant à diriger le fluide en provenance dudit au moins un dispositif de chauffage (24) jusqu'à un orifice de sortie respectif parmi lesdits premier et deuxième orifices de sortie (14A, 14B), **caractérisé en ce que** ledit appareil de chauffage (10) comprend un capteur de température agencé pour surveiller la température dans les deux parmi lesdits canaux de sortie respectifs de chaque côté du séparateur (46), ledit appareil de chauffage (10) comportant par ailleurs un dispositif de commande configuré pour commander le fonctionnement dudit au moins un dispositif de chauffage (24) en réponse à un signal de température en provenance dudit capteur de température.

2. Appareil de chauffage (10) selon la revendication 1, dans lequel ledit séparateur (46) s'étend entre ledit au moins un dispositif de chauffage (24) et lesdits premier et deuxième orifices de sortie (14A, 14B), lesdits canaux de sortie adjacents respectifs étant situés de chaque côté dudit séparateur (46), et dans lequel ledit séparateur (46) est formé et configuré pour diviser, lors de l'utilisation, ledit fluide chauffé émanant en provenance dudit au moins un dispositif de chauffage (24) de telle sorte que des quantités respectives dudit fluide s'écoulent le long de canaux respectifs de chaque côté dudit séparateur (46) jusqu'à un orifice de sortie respectifs parmi lesdits premier et deuxième orifices de sortie (14A, 14B).

3. Appareil de chauffage (10) selon l'une quelconque des revendications précédentes, dans lequel ledit séparateur (46) comprend au moins une ouverture (48) pour permettre audit fluide de passer entre des canaux de sortie adjacents, ladite au moins une ouverture (48) étant de préférence formée au niveau d'une extrémité dudit séparateur (46), et étant de préférence de forme sensiblement rectangulaire.

4. Appareil de chauffage (10) selon la revendication 3, dans lequel ladite au moins une ouverture (48) comporte une seule ouverture (48), de préférence située de manière sensiblement centrale au niveau d'une extrémité dudit séparateur (46).

5. Appareil de chauffage (10) selon la revendication 1 ou la revendication 2, dans lequel ledit capteur de température est monté dans une ouverture (48) mise en œuvre dans ledit séparateur (46).

6. Appareil de chauffage (10) selon l'une quelconque des revendications précédentes, dans lequel ledit séparateur (46) est disposé de manière oblique par rapport à une direction axiale dudit au moins un dispositif de chauffage (24).

7. Appareil de chauffage (10) selon l'une quelconque des revendications précédentes, dans lequel un déflecteur (50) est mis en œuvre dans ladite section de sortie s'étendant entre ledit au moins un dispositif de chauffage (24) et lesdits premier et deuxième orifices de sortie (14A, 14B) à des fins de déflexion dudit fluide émanant en provenance dudit au moins un dispositif de chauffage (24) vers lesdits premier et deuxième orifices de sortie (14A, 14B), le déflecteur (50) se prolongeant de préférence de manière sensiblement parallèle par rapport audit au moins un séparateur (46).

8. Appareil de chauffage (10) selon l'une quelconque des revendications précédentes, comprenant un ventilateur, de préférence un ventilateur centrifuge (22), agencé pour entraîner le fluide à être aspiré jusque dans ladite entrée (12), le long dudit trajet d'écoulement de fluide et à être expulsé au travers de ladite sortie de fluide (14).

9. Appareil de chauffage (10) selon l'une quelconque des revendications précédentes, dans lequel deux dispositifs de chauffage ou plus (24) sont mis en œuvre, agencés de préférence en série dans ledit trajet d'écoulement de fluide.

10. Appareil de chauffage (10) selon l'une quelconque des revendications précédentes, dans lequel ledit au moins un dispositif de chauffage (24) comporte un dispositif de chauffage électrique et/ou un dispositif de chauffage au gaz.

11. Appareil de chauffage (10) selon l'une quelconque des revendications précédentes, dans lequel chaque dispositif de chauffage (24) comporte un dispositif échangeur de chaleur ayant un ou plusieurs éléments échangeurs de chaleur situés dans ledit trajet d'écoulement de fluide au travers duquel ledit fluide passe lors de l'utilisation à des fins de chauffage.

12. Appareil de chauffage (10) selon l'une quelconque des revendications précédentes, dans lequel ledit au moins un dispositif de chauffage (24) comporte plus d'un dispositif de chauffage, ledit dispositif de commande étant configuré pour commander la totalité desdits dispositifs de chauffage (24) individuellement, et/ou pour commander deux dispositifs de chauffage ou plus (24) de telle sorte qu'ils fonctionnent simultanément.

13. Appareil de chauffage (10) selon la revendication 12, quand dépendante de la revendication 8, dans lequel le dispositif de commande sert à commander, lors de l'utilisation, une vitesse dudit ventilateur (22) en fonction du nombre de dispositifs de chauffage (24) qui sont actifs pour accroître la vitesse à laquelle le fluide est aspiré jusque dans l'appareil de chauffage (10) en réponse à une augmentation du nombre de dispositifs de chauffage (24) qui sont actifs, et pour réduire la vitesse à laquelle le fluide est aspiré jusque dans l'appareil de chauffage en réponse à une réduction du nombre de dispositifs de chauffage (24) qui sont actifs.
